# DEMANDE DE BREVET EUROPEEN

(11) **EP 2 014 631 A1**
(43) Date de publication de la demande: **14.01.2009**
(21) Numéro de dépôt: 08160088.4
(22) Date de dépôt: 10.07.2008
(51) Int. Cl.: C06B 43/00, C06D 5/06

(54) **Composés solides générateurs d'hydrogène et procédé de génération d'hydrogène**

(30) Priorité: 13.07.2007 FR 0756482
(71) Demandeur: SNPE Matériaux Energétiques, 75004 Paris (FR)
(72) Inventeur: Perut, Christian, 77310, SAINT-FARGEAU-PONTHIERRY (FR); Renouard, Joël, 77630, SAINT-MARTIN-EN-BIERE (FRANCE) (FR)
(74) Mandataire: Le Roux, Martine

(57) **Abrégé**

La présente invention a pour objet des composés solides générateurs, par combustion, d'hydrogène ainsi qu'un procédé de génération d'hydrogène basé sur la combustion desdits composés. Lesdits composés présentent une composition qui renferme au moins un borohydrure inorganique, choisi parmi les borohydrures alcalins, les borohydrures alcalino-terreux et leurs mélanges, et au moins un oxydant inorganique. De façon caractéristique, ladite composition comprend du soufre. Ledit procédé est avantageusement mis en oeuvre pour alimenter en hydrogène une pile à combustible.

## Description

La présente invention a pour objet des composés (matériaux ou produits) solides générateurs, par combustion, d'hydrogène ainsi qu'un procédé de génération d'hydrogène basé sur la combustion desdits composés.

La présente invention se situe dans le domaine de la production d'hydrogène, gaz largement utilisé comme combustible ou réducteur dans de nombreux procédés et dispositifs industriels. Elle a pour principal objet de nouveaux composés solides, décomposables en générant de l'hydrogène, selon une réaction auto-entretenue de combustion. Elle concerne également l'utilisation de ces nouveaux composés pour générer donc de l'hydrogène, notamment dans un contexte d'alimentation en hydrogène de piles à combustible à membrane échangeuse de protons.

L'homme du métier, qui souhaite notamment remplacer les batteries des systèmes électroniques portatifs, tels que les téléphones et ordinateurs, a le souci permanent de rechercher de nouveaux composés solides générateurs d'hydrogène par combustion, qui répondent, de façon la plus satisfaisante possible, au cahier des charges ci-après :
- être parfaitement stables dans le temps,
- pouvoir brûler à une température suffisamment élevée pour que la réaction de combustion soit auto-entretenue et ne s'interrompe donc pas (les composés doivent pouvoir être entièrement consommés en une fois), tout en générant des gaz (y compris donc de l'hydrogène) qui présentent une température acceptable dans le contexte de leur utilisation,
- avoir un bon rendement massique en hydrogène, et
- générer, lors de la combustion, le moins d'espèces nocives (réactives et/ou toxiques) possibles.

La Demanderesse a déjà proposé des composés de ce type : composés solides décomposables en générant de l'hydrogène selon une réaction auto-entretenue de combustion, après initiation de la combustion par une source de chaleur appropriée. Elle a plus particulièrement décrit de tels composés dans les demandes de brevet FR 2 823 203, FR 2 845 376, FR 2 845 377 et FR 2 857 358. Ces composés comprennent dans leur composition un borohydrure inorganique et un oxydant inorganique. Le qualificatif inorganique signifie ici, ainsi que dans toute la présente description, sans carbone.

La Demanderesse a notamment testé de tels composés, contenant:
- d'une part, un borohydrure alcalin, tel NaBH₄ ou LiBH₄ ou un borohydrure alcalino-terreux, tel Mg(BH₄)₂ ; et
- d'autre part, un oxydant inorganique, tel le perchlorate d'ammonium (NH₄ClO₄), le nitrate de strontium (Sr(NO₃)₂), le nitrate d'ammonium (NH₄NO₃) et l'ammonium dinitramine (N[H₄N(NO₂)₂).

La Demanderesse a montré que la combustion de tels composés génère de l'hydrogène avec un rendement massique qui peut atteindre 12 %. Ce résultat, inattendu, constitue un progrès technique et économique particulièrement intéressant. Bien évidemment, les résultats varient avec la nature et les proportions relatives des constituants des composés.

Les composés en cause sont avantageusement essentiellement constitués d'un borohydrure inorganique et d'un oxydant inorganique ; c'est-à-dire que ces constituants sont pondéralement majoritaires. Ils sont très avantageusement constitués, à plus de 75 % en masse (voire à plus de 95 % en masse) de ces constituants.

Dans des contextes particuliers, et notamment dans celui des piles à combustibles, certains des points du cahier des charges évoqué ci-dessus sont capitaux.

Les produits arrivant au niveau de la pile à combustible doivent être exempts, ou avoir des taux extrêmement faibles, d'espèces ayant une action d'empoisonnement du catalyseur de la pile : c'est en particulier le cas pour CO, NH_{3,} Cl₂ et H₂S.

La température des gaz au niveau de la pile doit être limitée à environ 350K pour éviter la détérioration de la membrane et le taux de particules doit être très faible.

Les composés générateurs d'hydrogène sont donc à optimiser pour générer le moins possible d'espèces gazeuses poisons pour la pile et pour brûler à une température modérée. Des dispositifs de filtration et de refroidissement peuvent être adaptés sur le générateur de gaz incorporant le composé de façon à abaisser encore la température des gaz, et de façon à capter les espèces gazeuses poisons résiduelles.

La Demanderesse s'est tout particulièrement intéressée, par le passé, au problème technique de la génération d'hydrogène par voie pyrotechnique, produisant le moins possible d'espèces gazeuses poisons pour la pile à combustible. Le tableau 1 ci-après montre des exemples de calculs thermodynamiques de la combustion de composés de l'art antérieur évoqués ci-dessus (la composition desdits composés indiquée est une composition en masse).

N'ont été listées, dans la dernière partie dudit tableau 1, que les espèces, solides, liquides ou gazeuses, formées à un taux massique supérieur ou égal à 1 %.

**Tableau 1**

| | | | | | |
|---|---|---|---|---|---|
| Borohydrure | NaBH₄ (60%) | LiBH₄ (60%) | NaBH₄ (60%) | NaBH₄ (70%) | Mg(BH₄)₂ (70%) |
| Oxydant | Sr(NO₃)₂ (40%) | Sr(NO₃)₂ (40%) | NH₄ClO₄ (40%) | NH₄N(NO₂)₂ (30%) | Sr(NO₃)₂ (30%) |
| Tc (K) | 820 | 743 | 1183 | 950 | 1071 |
| Produits formés | | | | | |
| **H₂** (g) | **6,4** | **10,2** | **7,8** | **8,4** | **10,4** |
| B (s) | 6,3 | 25,7 | 6,1 | 3,4 | 24,5 |
| BN (s) | 9,4 | 9,4 | 8,4 | 24,0 | 7,0 |
| B₂O₃(l) | 21,7 | | | 11,2 | |
| **LiH** (s) | | **6,9** | | | |
| **Li₂O** (s) | | **28,2** | | | |
| **Mg** (g) | | | | | **1,4** |
| **Mg** (l) | | | | | **8,7** |
| MgO (s) | | | | | 29,15 |
| N₂(g) | | | | | |
| **Na** (l) | **35,3** | | | **23,7** | |
| **Na**₂(g) | | | | **2,8** | |
| **Na** (g) | | | **12,4** | **10,5** | |
| SrO (s) | 19,6 | 19,6 | | | 13,2 |
| NaCl (s) | | | 18,6 | | |
| NaBO₂ (g) | | | 44,7 | 15,9 | |

| | | | | | |
|---|---|---|---|---|---|
| (s) : à l'état solide, (l) : à l'état liquide, (g) : à l'état gazeux | | | | | |

Les compositions de l'art antérieur du tableau 1 répondent bien aux exigences que s'étaient fixées la Demanderesse, mais elles présentent l'inconvénient de générer des espèces très réactives susceptibles de constituer un danger pour l'utilisateur.

Le sodium (de NaBH₄) se retrouve sous forme liquide ou partiellement sous forme liquide et partiellement sous forme gazeuse.

Le lithium (de LiBH₄) se retrouve sous forme d'oxyde (Li₂O) et d'hydrure (LiH).

Le magnésium (de Mg(BH₄)₂) se retrouve, pour sa plus grande partie, sous forme d'oxyde de magnésium (MgO), sans conséquence pour l'environnement, et, en moindres proportions, sous forme de magnésium liquide et gazeux.

Il est connu que Na et LiH, et dans une moindre mesure Mg, sont des produits très réactifs, en particulier avec l'eau, nécessitant une vigilance particulière. Leur présence n'est pas souhaitée dans les résidus de combustion. Elle peut être tolérée pour des applications mettant en jeu de petite quantité de produit générateur d'hydrogène. Elle est par contre problématique pour des applications, à plus forte puissance électrique, pouvant générer jusqu'à plusieurs kilogrammes de résidus de combustion.

Un vrai problème technique est donc celui de la génération de ces espèces indésirables car très réactives. Ce problème technique est d'autant plus délicat que les recettes traditionnelles pour capter ces espèces, par exemple Na, Li ou Mg, ne peuvent s'appliquer dans le contexte particulier de la génération d'hydrogène par combustion des composés en cause. Ainsi, par exemple, l'augmentation du taux de perchlorate d'ammonium afin de capter tout le sodium ou le lithium pour former NaCl ou LiCI n'est pas envisageable car ceci augmente la température de combustion au-dessus des valeurs acceptables, tout en diminuant la teneur en hydrogène en dessous du taux d'intérêt. De même, l'incorporation de molécules organiques pour former des carbonates de Na et de Li n'est pas non plus envisageable car, à faible température de combustion, la formation de CO est systématique et représente un poison pour la pile à combustible.

Dans un tel contexte, la Demanderesse propose de nouveaux composés solides, aptes à générer de l'hydrogène, particulièrement intéressants en ce que leur combustion ne génère pas ou génère très peu de résidus réactifs et/ou toxiques. Le problème technique évoqué ci-dessus a été traité, en amont, au niveau de la composition desdits composés.

Les recherches menées par la Demanderesse lui ont en fait permis de trouver un oxydant, substitut en totalité ou en partie seulement de l'oxydant inorganique de l'art antérieur, qui permet de diminuer, voire d'éviter la production de résidus réactifs (notamment de résidus métalliques), tout en conservant aux composés renfermant ledit oxydant les propriétés exigées pour leur application, notamment aux piles à combustible (taux de production en espèces poisons pour la pile réduit donc, mais aussi température de combustion "adéquate" et taux de production d'hydrogène élevé). L'oxydant en cause est le soufre.

Selon son premier objet, la présente invention concerne donc des composés (matériaux ou produits) solides, aptes à générer de l'hydrogène par combustion (c'est-à-dire décomposables en générant de l'hydrogène selon une réaction auto-entretenue de combustion), composés dont la composition renferme au moins un borohydrure inorganique, choisi parmi les borohydrures alcalins, les borohydrures alcalino-terreux et leurs mélanges, et au moins un oxydant inorganique. De façon caractéristique, la composition desdits composés comprend du soufre.

Le soufre présent dans ladite composition des composés de l'invention vise à capter les éléments de décomposition dudit au moins un borohydrure inorganique, pour former des espèces solides peu réactives, non toxiques, telles que Na₂S, Li₂S, MgS (en lieu et place des espèces réactives évoquées ci-dessus : Na, LiH et Mg).

En comparaison des composés de l'art antérieur contenant un oxydant inorganique hydrogéné (tel un sel d'ammonium ou une dinitramine), les composés de l'invention, avec soufre en remplacement total ou partiel dudit oxydant, produisent légèrement moins d'hydrogène.

En comparaison des composés de l'art antérieur contenant un oxydant inorganique sans hydrogène (tel le nitrate de strontium), les composés de l'invention, avec soufre en remplacement total ou partiel dudit oxydant, produisent autant d'hydrogène.

La présence de soufre, dans la composition des composés solides de l'invention (composés solides aptes à générer de l'hydrogène par combustion, notamment pour alimenter en hydrogène une pile à combustible) est originale à ce jour. Elle s'est révélée, de manière inattendue, particulièrement opportune. Le soufre permet en effet de neutraliser, en grande partie, voire en totalité, les alcalins (Na, Li) et alcalino-terreux (Mg), tout en minimisant, voire évitant, la formation de H₂S (poison pour une pile à combustible). Dans un contexte d'alimentation en hydrogène de piles à combustible, la formation de H₂S était assurément redoutée ; elle constituait le fondement d'un réel préjugé à l'incorporation de soufre dans la composition de composés générateurs d'hydrogène pour piles à combustible. Il est du mérite de la Demanderesse d'avoir vaincu ce préjugé en montrant l'intérêt des composés de la présente invention.

Les composés de l'invention sont en fait susceptibles d'exister selon deux variantes. Selon une première variante, leur composition renferme :
- au moins un borohydrure inorganique, choisi parmi les borohydrures alcalins, les borohydrures alcalino-terreux et leurs mélanges (généralement un tel borohydrure inorganique) ;
- au moins un oxydant inorganique (généralement un tel oxydant inorganique) ; et
- du soufre.

Dans le cadre de cette première variante, on peut considérer que le soufre intervient en substitution partielle de la charge oxydante classique de composés analogues de l'art antérieur.

Selon une seconde variante, la composition des composés de l'invention, renfermant au moins un borohydrure inorganique et au moins un oxydant inorganique, renferme en fait le soufre à titre d'unique oxydant inorganique. Dans le cadre de cette seconde variante, le soufre intervient en substitution totale de la charge oxydante classique des composés analogues de l'art antérieur.

Pour ce qui concerne la teneur en soufre des composés de l'invention (selon la première ou la seconde variante ci-dessus), elle est généralement comprise entre 5 et 60 % en masse, avantageusement entre 20 et 45 % en masse. L'homme du métier aura à coeur d'optimiser cette teneur en soufre de façon :
- à capter au mieux les produits de décomposition dudit au moins un borohydrure inorganique ;
   tout en
- conservant une température de combustion "adéquate" : suffisamment élevée pour assurer la bonne combustion du produit mais compatible avec l'application en cause ;
- minimisant la production de H₂S (poison pour une pile à combustible) ; et
- limitant la perte en hydrogène produit, "dans un contexte où le soufre intervient en substitution d'un oxydant hydrogéné".

On note incidemment ici que le soufre dont l'intervention, selon l'invention, s'analyse principalement en substitution partielle ou totale du au moins un oxydant inorganique, peut en sus intervenir en substitution partielle du au moins un borohydrure inorganique, pour conserver une température de combustion modérée.

En référence à la composition des composés de l'invention, on peut indiquer que ledit au moins un borohydrure inorganique et ledit au moins un oxydant inorganique (comprenant le soufre, voire consistant en le soufre) représentent généralement au moins 96 % en masse de la masse totale desdits composés (voire au moins 98 % en masse, voire 100 % en masse).

L'éventuel complément à 100 % est en général constitué d'additifs, type auxiliaires de procédé, de stabilité, de désensibilisation à l'électricité statique (tel SiO₂) et/ou modificateurs de balistique, de combustion...

On note que, de façon caractéristique, les composés de l'invention ne contiennent pas dans leur composition de liant organique.

On peut également indiquer que la composition des composés de l'invention renferme généralement :
- de 40 à 80 % en masse d'au moins un borohydrure inorganique choisi parmi les borohydrures alcalins, les borohydrures alcalino-terreux et leurs mélanges (généralement d'un tel borohydrure inorganique), et
- de 20 à 60 % en masse d'au moins un oxydant inorganique (généralement d'un tel oxydant inorganique et du soufre ou de soufre) ;
renferme avantageusement :
- de 55 à 75 % en masse d'au moins un borohydrure inorganique choisi parmi les borohydrures alcalins, les borohydrures alcalino-terreux et leurs mélanges (généralement d'un tel borohydrure inorganique), et
- de 25 à 45 % en masse d'au moins un oxydant inorganique (généralement d'un tel oxydant inorganique et du soufre ou de soufre).

Pour ce qui concerne les constituants des composés de l'invention, il s'agit, en fait, outre le soufre, de constituants, type borohydrure inorganique et oxydant inorganique, des composés de l'art antérieur.

Ledit au moins un borohydrure inorganique est donc choisi parmi les borohydrures alcalins (notamment de sodium, de lithium), les borohydrures alcalino-terreux (notamment de magnésium) et leurs mélanges. Avantageusement, un unique borohydrure de ce type intervient. De préférence, ledit au moins un borohydrure inorganique est choisi parmi le borohydrure de sodium, de lithium ou de magnésium. Les composés de l'invention renferment très avantageusement NaBH₄, LiBH₄ ou Mg(BH₄)₂.

Ledit au moins un oxydant inorganique est donc du soufre ou un mélange de soufre et d'au moins un autre oxydant inorganique, généralement du type de ceux utilisés dans la composition des composés de l'art antérieur, tels :
- un sel d'ammonium, avantageusement le perchlorate d'ammonium,
- une dinitramine, avantageusement l'ammonium dinitramine ;
ou
- un nitrate, avantageusement le nitrate de strontium.

Les composés de l'invention renferment très avantageusement NH₄ClO₄, NH₄N(NO₂)₂ ou Sr(NO₃)₂.

Dans le cadre de variantes avantageuses, les composés de l'invention renferment essentiellement (pour au moins 96 % de leur masse, voir ci-dessus) :
■ NaBH₄ + S + Sr(NO₃)₂, ou
■ NaBH₄ + S + NH₄ClO₄, ou
■ NaBH₄ + S + NH₄N(NO₂)₂, ou
■ Mg(BH₄) + S.

Les composés solides de l'invention sont avantageusement des matériaux compactés qui présentent une forme géométrique donnée. De façon préférée, ils se présentent sous la forme de grains, de pastilles ou de blocs. Lesdits grains, pastilles ou blocs ont une forme quelconque, par exemple sphérique, ovoïde ou cylindrique. Les grains ont généralement une masse de quelques milligrammes, les pastilles une masse de quelques dixièmes de grammes à quelques grammes et les blocs de quelques dizaines de grammes à quelques centaines de grammes.

Les procédés d'obtention de ces composés solides sont des procédés analogues à ceux de l'art antérieur, décrits notamment dans les demandes de brevet identifiées dans l'introduction du présent texte.

L'homme du métier maîtrise parfaitement de tels procédés pour l'obtention de composés solides (à partir de poudres), présentement de composés solides de l'invention, dont la composition renferme, de façon caractéristique, du soufre.

La présente invention a également pour objet un procédé de génération d'hydrogène, par combustion (auto-entretenue) d'au moins un composé solide. Ledit procédé de combustion, connu *per se*, est de façon caractéristique mis en oeuvre avec au moins un composé de l'invention, tel que décrit ci-dessus (composé dont la composition renferme au moins un borohydrure inorganique, choisi parmi les borohydrures alcalins, les borohydrures alcalino-terreux et leurs mélanges, et au moins un oxydant inorganique et comprend du soufre).

Ledit procédé, connu *per se,* comprend généralement les étapes ci-après :
- on réalise tout d'abord une composition solide homogène, pulvérulente ou granulaire, comprenant ledit au moins un borohydrure et ledit au moins oxydant ;
- on agglomère ensuite cette composition selon des moyens appropriés, par exemple ceux précités, de façon à former un composé se présentant sous forme d'un matériau compact ; puis
- on place le matériau compact dans une chambre à combustion que l'on purge sous gaz inerte ou sous vide. Lorsque le volume mort est faible (volume restant de la chambre après mise en place du matériau compact), une telle purge peut, en pratique, être inutile.
- on initie alors la combustion du matériau compact à l'aide d'une source de chaleur appropriée, ce qui provoque la combustion auto-entretenue du matériau avec génération d'hydrogène jusqu'à la fin de la combustion. Les sources de chaleur appropriées permettant l'initiation de la combustion par effet " Joule " sont bien connues de l'homme du métier, notamment les initiateurs électriques. L'utilisation d'un filament d'allumage nickel-chrome placé en contact ou enrobé avec le composé à initier, auquel on impose une tension et une intensité de courant suffisantes (donc une puissance suffisante), convient parfaitement. On peut, par exemple, pour une tension donnée, augmenter l'intensité du courant jusqu'à l'initiation de la combustion. Dans certains cas, pour favoriser l'allumage, on peut disposer une poudre d'allumage relais classique bien connue de l'homme du métier, entre le filament et le matériau compact.

Le procédé de l'invention - procédé de génération d'hydrogène par combustion des composés solides décrits ci-dessus - est avantageusement mis en oeuvre pour alimenter en hydrogène une pile à combustible à membrane échangeuse de protons. Une telle pile, familière à l'homme du métier, comprend au moins une cellule électrochimique et un générateur pyrotechnique d'hydrogène. Dans le cadre du procédé de l'invention, ledit générateur a son fonctionnement basé sur la combustion de composés solides de l'invention.

Le procédé de l'invention peut tout à fait s'analyser en termes d'utilisation des composés de l'invention.

La présente invention concerne également les mélanges de poudres (au moins un borohydrure inorganique, choisi parmi les borohydrures alcalins, les borohydrures alcalino-terreux et leurs mélanges à l'état de poudre, soufre à l'état de poudre et éventuellement au moins un autre oxydant inorganique à l'état de poudre), précurseurs de composés de l'invention.

### Exemple 1 : Composés solides constitués d'un mélange de NaBH₄, de Sr(NO₃)₂ et de S.

Des calculs thermodynamiques ont été réalisés pour montrer l'intérêt d'additionner du soufre aux composés de l'art antérieur NaBH₄/Sr(NO₃)₂ en vue de diminuer le taux de Na résiduel après combustion. Ils sont présentés dans le tableau 2.

**Tableau 2**

| | Art antérieur | Composés selon l'invention | | | | |
|---|---|---|---|---|---|---|
| Pourcentage massique | | | | | | |
| NaBH₄ | 60,0 | 60,0 | 60,0 | 60,0 | 60,0 | 60,0 |
| S | 0,0 | 10,0 | 12,5 | 20,0 | 25,0 | 30,0 |
| Sr(NO₃)₂ | 40,0 | 30,0 | 27,5 | 20,0 | 15,0 | 10,0 |
| Température de combustion (K) à une pression de 0,1 Mpa | | | | | | |
| | 820,0 | 853,0 | 859,0 | 878,0 | 937,0 | 839,0 |
| Produits après combustion présents à un taux supérieur à 1% | | | | | | |
| Nature | pourcentage massique | | | | | |
| **H₂** (g) | **6,4** | **6,4** | **6,4** | **6,4** | **6,4** | **6,2** |
| **H₂S** (g) | | | | | | **2,7** |
| **Na** (g) | | **1,6** | **1,8** | **2,4** | **1,0** | |
| NaBO₂ (g) | | 0,9 | 1,1 | 1,8 | 1,4 | |
| B(s) | 6,3 | 9,0 | 9,7 | 11,8 | 13,0 | 13,9 |
| BN (s) | 9,4 | 7,0 | 6,5 | 4,7 | 3,5 | 2,3 |
| B₂O₃ (l) | 21,7 | 15,8 | 14,3 | 9,7 | 7,7 | 6,6 |
| **Na** (l) | **35,3** | **19,9** | **16,0** | **4,2** | | |
| **Na₂S** (g) | | **24,3** | **30,4** | **48,7** | **59,3** | **61,9** |
| SrO (s) | 19,6 | 14,7 | 13,5 | 9,8 | 5,2 | |
| SrS (s) | | | | | 2,4 | 5,7 |

Le taux de sodium liquide produit après combustion du composé de l'art antérieur NaBH₄/Sr(NO₂)₃ (sans l'additif soufre) est de 35,3 %.

Lorsque l'on augmente le taux de soufre en remplacement du Sr(NO₃)₂, la teneur en sodium à l'état métallique dans les produits de combustion diminue. La quantité de Na₂S augmente en contrepartie.

Le remplacement de 25% de Sr(NO₃)₂ par du soufre conduit à un taux de sodium de l'ordre de 1% à l'état gazeux. Le sodium se retrouve très majoritairement sous la forme de Na₂S. Le taux d'hydrogène n'est pas modifié. La température de combustion reste inférieure à 1000 K.

Au-dessus d'un taux en soufre de 25 % en remplacement du Sr(NO₃)₂, le taux de Na produit est inférieur à 1 % mais on assiste à la formation de H₂S, qui est un poison pour la pile, à un taux non négligeable. Il faut alors capter ce produit H₂S dans le générateur avant qu'il ne rentre pas en contact avec la pile à combustible.

### Exemple 2 : Composés solides constitués d'un mélange de NaBH₄, de NH₄ClO₄ et de S.

Des calculs thermochimiques ont été réalisés pour montrer l'intérêt d'additionner du soufre aux composés de l'art antérieur NaBH₄/NH₄ClO₄ en vue de diminuer le taux de Na résiduel après combustion. Ils sont présentés dans le tableau 3.

**Tableau 3**

| | Art antérieur | | Composés selon l'invention | | |
|---|---|---|---|---|---|
| | Pourcentage massique | | | | |
| NaBH₄ | 60 | 60 | 60 | 60 | 60 |
| S | 0 | 20 | 25 | 30 | 35 |
| NHaClO₄ | 40 | 20 | 15 | 10 | 5 |
| Température de combustion (K) à une pression de 0,1 Mpa | | | | | |
| T (K) | 1183 | 1290 | 1238 | 987 | 682 |
| Produits après combustion présents à un taux supérieur à 1% | | | | | |
| Nature | pourcentage massique | | | | |
| HBS (g) | | | 1,910 | 3,797 | 0,245 |
| **H₂** (g) | **7,8** | **7,1** | **6,8** | **6,4** | **5,9** |
| **H₂S** (g) | | | | **3,4** | **10,7** |
| **Na** (g) | **12,4** | | | | |
| NaBO₂ (g) | 44,7 | 910 | | | |
| NaCl (g) | 0,72 | 2,4 | 1,1 | | |
| Na₂Cl₂ (g) | | 1,6 | | | |
| B (s) | 6,1 | 10,9 | 11,6 | 12,8 | 15,4 |
| BN (s) | 8,4 | 4,2 | 3,2 | 2,1 | 1,0 |
| B₂O₃ (l) | | 9,3 | 11,6 | 7,8 | 3,9 |
| NaCl (l) | 18,6 | 5,9 | 5,5 | | |
| NaCl (s) | | | | 5,0 | 2,5 |
| **Na₂S** (g) | | **48,6** | **56,8** | **58,6** | **60,2** |

Le taux de sodium produit après combustion du composé de l'art antérieur NaBH₄/NH₄ClO₄ (sans additif soufre) est de 12,4 %. Une partie du sodium se retrouve sous la forme de NaCl ou de NaBO₂. Il n'est pas envisageable d'augmenter le taux de perchlorate d'ammonium car cela diminue le taux d'hydrogène et augmente la température de combustion au-delà des limites acceptables pour l'application.

Le remplacement de la moitié du perchlorate d'ammonium par du soufre conduit à un taux de sodium inférieur à 1 %. Le taux d'hydrogène est seulement réduit de 7,8 à 7,1.

Au-dessus d'un taux en soufre de 25 % en remplacement du NH₄ClO₄, le taux de Na produit est inférieur à 1% mais on assiste à la formation de H₂S, qui est un poison pour la pile, à un taux non négligeable. Il faut alors capter ce produit H₂S dans le générateur avant qu'il ne rentre en contact avec la pile à combustible.

### Exemple 3 : Composés solides constitués d'un mélange de NaBH₄, NH₄N(NO₂)₂ et de S.

Des calculs thermodynamiques ont été réalisés pour montrer l'intérêt d'additionner du soufre au composé de l'art antérieur NaBH₄/NH₄(NO₃)₂ en vue de diminuer le taux de Na résiduel après combustion. Ils sont présentés dans le tableau 4.

**Tableau 4**

| | Art intérieur | Composés selon l'invention | |
|---|---|---|---|
| | Pourcentage massique | | |
| NaBH₄ | 70 | 65 | 65 |
| S | 0 | 25 | 30 |
| NH₄N(NO₂)₂ | 30 | 10 | 5 |
| Température de combustion (K) à) une pression de 0,1 Mpa | | | |
| T(K) | 950 | 945 | 734 |
| Produits après combustion ayant un taux supérieur à 1% | | | |
| Nature | Pourcentage massique | | |
| HBS (g) | | | 1,910 |
| **H₂** (g) | **8,4** | **7,2** | **6,9** |
| **H₂S** (g) | | | **2,5** |
| **Na** (g) | **10,5** | **2,3** | |
| **Na₂** (g) | **2,8** | | |
| **Na**(l) | **23,7** | | |
| NaBO₂ (g) | 15,9 | 3,3 | |
| B (s) | 3,4 | 12,9 | 15,6 |
| BN (s) | 24,0 | 8,0 | 4,00 |
| B₂O₃ (l) | 11,2 | 5,1 | 37 |
| **Na₂S** (g) | | **60,8** | **67,0** |

Le taux de sodium produit après combustion du composé de l'art antérieur NaBH₄/NH₄N(NO₂)₂ (sans l'additif soufre) est de 37 %.

L'ajout de 25% du soufre en remplacement d'une partie de l'ammonium dinitramine et d'une partie du borohydrure alcalin (ceci afin de maintenir la température de combustion au plus proche de celle du composé de l'art antérieur) conduit à un taux de sodium inférieur à 3 %. Le taux d'hydrogène est réduit de 8,4 à 7,2.

Au-dessus d'un taux en soufre de 25 %, le taux de Na est inférieur à 1% mais on assiste à la formation de H₂S à un taux non négligeable qui est un poison pour la pile. Il faut alors capter ce produit H₂S dans le générateur avant qu'il rentre en contact avec la pile à combustible.

### Exemple 4 : Composés solides constitués d'un mélange de Mg(BH₄)₂ et de S.

Des calculs thermodynamiques ont été réalisés pour montrer l'intérêt de remplacer en totalité l'oxydant Sr(NO₃)₂ du composé de l'art antérieur Mg(BH₄)₂/ Sr(NO₃)₂ par du soufre. Ils sont présentés dans le tableau 5.

**Tableau 5**

| | Art antérieur Art | Composé selon l'invention |
|---|---|---|
| Mg(BH₄)₂ | 70 | 62,7 |
| Sr(NO3)2 | 30 | |
| S | | 37,3 |
| Température de combustion (K) à une pression de 0,1 Mpa | | |
| Tc(K) | 1071 | 1206 |
| Produits après combustion ayant un taux supérieur à 1% | | |
| **H₂** (g) | **10,4** | **9,4** |
| **Mg** (g) | **1,4** | |
| B(s) | 25,0 | 25,1 |
| BN (s) | 7.0 | |
| **Mg** (l) | **8,7** | |
| MgO (s) | 29,1 | |
| **MgS** (s) | - | **65,5** |
| SrO(s) | 13,2 | |

Le taux de magnésium produit après combustion du composé de l'art antérieur Mg(BH₄)₂/Sr(NO₃)₂ (sans l'additif soufre) est de 10,1 %.

Dans ce cas, la forte affinité de l'élément soufre pour le magnésium permet de remplacer totalement l'oxydant de l'art antérieur par du soufre sans qu'il y ait production de H₂S.

## Revendications

1. Composé solide, apte à générer de l'hydrogène par combustion, dont la composition renferme au moins un borohydrure inorganique, choisi parmi les borohydrures alcalins, les borohydrures alcalino-terreux et leurs mélanges, et au moins un oxydant inorganique, **caractérisé en ce que** ladite composition comprend du soufre.

2. Composé selon la revendication 1, dont la composition renferme :
- au moins un borohydrure inorganique, choisi parmi les borohydrures alcalins, les borohydrures alcalino-terreux et leurs mélanges,
- au moins un oxydant inorganique, et
- du soufre.

3. Composé selon la revendication 1, dont la composition comprend du soufre à titre d'unique oxydant inorganique.

4. Composé selon l'une quelconque des revendications 1 à 3, dont ta composition renferme de 5 à 60 % en masse, avantageusement de 20 à 45 % en masse, de soufre.

5. Composé selon l'une quelconque des revendications 1 à 4, **caractérisé en ce que** ledit au moins un borohydrure inorganique et ledit au moins un oxydant inorganique, comprenant le soufre, voire consistant en ledit soufre, représente au moins 96 % en masse de la masse dudit composé.

6. Composé selon l'une quelconque des revendications 1 à 5, dont la composition renferme :
- de 40 % à 80 %, avantageusement de 55 à 75 %, en masse dudit au moins un borohydrure inorganique ; et
- de 20 à 60 %, avantageusement de 25 à 45 %, en masse dudit au moins un oxydant inorganique.

7. Composé selon l'une quelconque des revendications 1 à 6, **caractérisé en ce que** ledit au moins un borohydrure inorganique est choisi parmi le borohydrure de sodium, de lithium ou de magnésium.

8. Composé selon l'une quelconque des revendications 1 à 7, **caractérisé en ce que** ledit au moins un oxydant inorganique, en sus du soufre, est choisi parmi les sels d'ammonium, avantageusement le perchlorate d'ammonium, les dinitramines, avantageusement l'ammonium dinitramine, et les nitrates, avantageusement le nitrate de strontium.

9. Composé selon l'une quelconque des revendications 1 à 8, **caractérisé en ce qu'**il se présente sous la forme d'un grain, d'une pastille ou d'un bloc.

10. Procédé de génération d'hydrogène par combustion d'au moins un composé solide, **caractérisé en ce que** ledit au moins un composé solide est un composé solide selon l'une quelconque des revendications 1 à 9.

11. Procédé selon la revendication 10, **caractérisé en ce qu'**il est mis en oeuvre pour alimenter en hydrogène une pile à combustible à membrane échangeuse de protons.
